# EUROPEAN PATENT APPLICATION

(11) **EP 2 634 846 A1**
(43) Date of publication of application: **04.09.2013**
(21) Application number: 11836422.3
(22) Date of filing: 27.10.2011
(51) Int. Cl.: H01M 4/525, H01M 4/36, H01M 4/505

(54) **POSITIVE ELECTRODE ACTIVE MATERIAL, POSITIVE ELECTRODE, BATTERY, AND PRODUCTION METHOD FOR LITHIUM ION SECONDARY BATTERY**

(30) Priority: 29.10.2010 JP 2010243914
(71) Applicant: Asahi Glass Company, Limited, Tokyo 100-8405 (JP)
(72) Inventor: TSUNOZAKI, Kentaro, Tokyo 100-8405 (JP); ZENG, Haisheng, Tokyo 100-8405 (JP)
(74) Representative: Müller-Boré & Partner Patentanwälte
(86) International application number: PCT/JP2011/074867
(87) International publication number: WO 2012/057289

(57) **Abstract**

The present invention provides a cathode active material for a lithium ion secondary battery excellent in the cycle characteristics and rate characteristics even when charged at a high voltage, a cathode, a lithium ion secondary battery and a method for producing a cathode active material for a lithium ion secondary battery. The cathode active material comprises particles (II) having an oxide (I) of at least one metal element selected from Zr, Ti and Al locally distributed at the surface of a lithium-containing composite oxide comprising Li element and at least one transition metal element selected from the group consisting of Ni, Co and Mn (provided that the molar amount of the Li element is more than 1.2 times the total molar amount of said transition metal element).

## Description

### TECHNICAL FIELD

The present invention relates to a cathode active material for a lithium ion secondary battery, a cathode, a lithium ion secondary battery, and a method for producing a cathode active material for a lithium ion secondary battery.

### BACKGROUND ART

Lithium ion secondary batteries are widely used for portable electronic instruments such as cell phones or notebook-size personal computers. As a cathode active material for a lithium ion secondary battery, a composite oxide of lithium with a transition metal, etc., such as LiCoO₂, LiNiO₂, LiNi_{0.8}Co_{0.2}O₂ or LiMnO₄, is employed. Particularly, a lithium ion secondary battery using LiCoO₂ as a cathode active material and using a lithium alloy or carbon such as graphite or carbon fiber as an anode material, is widely used as a battery having a high energy density, since a high voltage at a level of 4 V can thereby be obtainable. However, in recent years, it is desired to reduce the size and weight as a lithium ion secondary battery for portable electronic instruments or vehicles, and it is desired to further improve the discharge capacity per unit mass or such characteristics that the discharge capacity does not substantially decrease after repeating the charge and discharge cycle (hereinafter referred to also as cycle characteristics).

In order to improve the discharge capacity, Patent Document 1 discloses a cathode active material containing a lithium transition metal composite oxide having an α-NaFeO2-type crystal structure, wherein the compositional ratio of Li element and transition metal elements is Li_{1+1/3x}Co_{1-x-y}Ni_{y/2}Mn_{2x/3+y/2} (x+y≦1, 0≦y, and 1/3<x≦2/3).

However, in a cathode active material wherein the compositional ratio (molar ratio) of Li element to the transition metal elements is at least 1, manganese element is contained in a large amount in the transition metals, and such manganese element is likely to elute when it is in contact with an electrolyte decomposed by charging at a high voltage. Therefore, the crystal structure of the cathode active material becomes unstable, and particularly, the cycle characteristics by repetition of charging and discharging was inadequate.

In order to improve such cycle characteristics, Patent Document 2 discloses that by incorporating Al, Ti, Mg and B elements into the crystal structure of a lithium composite oxide, the stability of such a crystal structure can be improved. However, such a crystal structure had a problem that the discharge capacity per unit mass tends to decrease, and it was inadequate as a material to satisfy both the cycle characteristics and high discharge capacity.

Patent Document 3 discloses a cathode active material for a non-aqueous electrolyte secondary battery, wherein Zr element is substantially present in the surface layer. Patent Document 3 discloses that the cycle characteristics are excellent even at an operation voltage as high as 4.5 V, but the initial discharge capacity was at most 191 mAh/g, and it was not possible to obtain a sufficient discharge capacity.

### PRIOR ART DOCUMENTS

### PATENT DOCUMENTS

Patent Document 1: JP-A-2009-152114
Patent Document 2: JP-A-2003-151548
Patent Document 3: WO2007/102407

### DISCLOSURE OF INVENTION

### OBJECT OF INVENTION

The present invention is to provide a cathode active material for a lithium ion secondary battery excellent in the cycle characteristics and rate characteristics even when charged at a high voltage, a cathode, a lithium ion secondary battery and a method for producing a cathode active material for a lithium ion secondary battery.

### SOLUTION TO PROBLEM

The present invention provides the following.
[1] A cathode active material for a lithium ion secondary battery, which comprises particles (II) having an oxide (I) of at least one metal element selected from Zr, Ti and Al locally distributed at the surface of a lithium-containing composite oxide comprising Li element and at least one transition metal element selected from the group consisting of Ni, Co and Mn (provided that the molar amount of the Li element is more than 1.2 times the total molar amount of said transition metal element).
[2] The cathode active material according to [1], wherein the molar amount of at least one metal element selected from the group consisting of Zr, Ti and Al, is from 0.0001 to 0.05 times the total molar amount of said transition metal element in the lithium-containing composite oxide.
[3] The cathode active material according to [1] or [2], wherein the oxide (I) of said metal element is at least one member selected from the group consisting of ZrO₂, TiO₂ and Al₂O₃.
[4] The cathode active material according to any one of [1] to [3], wherein the lithium-containing composite oxide is represented by the following formula (1):

   Li(LiₓMn_{y}Me_{z})OₚF_{q} (1)

   wherein Me is at least one element selected from the group consisting of Co and Ni, 0.1<x<0.25, 0.5≦y/(y+z)≦0.8, x+y+z=1, 1.9<p<2.1, and 0≦q≦0.1.
[5] A method for producing a cathode active material for a lithium ion secondary battery, which comprises contacting and heating the following composition (1) and a lithium-containing composite oxide comprising Li element and at least one transition metal element selected from the group consisting of Ni, Co and Mn (provided that the molar amount of the Li element is more than 1.2 times the total molar amount of said transition metal element), to obtain a cathode active material for a lithium ion secondary battery, which comprises particles (II) having an oxide (I) of at least one metal element selected from the group consisting of Zr, Ti and Al locally distributed at the surface of the lithium-containing composite oxide:
   Composition (1): a composition having dissolved in a solvent a compound containing at least one metal element selected from the group consisting of Zr, Ti and Al.
[6] The method according to [5], wherein said heating is carried out from 200 to 600°C.
[7] The method according to [5] or [6], wherein the solvent in the composition (1) is water.
[8] The method according to any one of [5] to [7], wherein the pH of the composition (1) is from 3 to 12.
[9] The method according to any one of [5] to [8], wherein said contacting of the composition (1) and the lithium-containing composite oxide is carried out by adding the composition to the lithium-containing composite oxide under agitation and mixing the composition and the lithium-containing composite oxide.
[10] The method according to any one of [5] to [9], wherein the compound containing at least one metal element selected from the group consisting of Zr, Ti and Al, is at least one compound selected from the group consisting of ammonium zirconium carbonate, an ammonium zirconium halide, titanium lactate, titanium lactate ammonium salt, aluminum lactate and basic aluminum lactate.
[11] The method according to any one of [5] to [10], wherein the lithium-containing composite oxide is represented by the following formula (1):

   Li(LiₓMn_{y}Me_{z})OₚF_{q} (1)

   wherein Me is at least one element selected from the group consisting of Co and Ni, 0.1<x<0.25, 0.5≦y/(y+z)≦0.8, x+y+z=1, 1.9<p<2.1, and 0≦q≦0.1.
[12] The method according to any one of [5] to [11], wherein said contacting of the composition (1) and the lithium-containing composite oxide is carried out by spraying the composition to the lithium-containing composite oxide by a spray coating method.
[13] A cathode for a lithium ion secondary battery, which comprises the cathode active material for a lithium ion secondary battery as defined in any one of [1] to [4], an electrically conductive material and a binder.
[14] A lithium ion secondary battery comprising the cathode as defined in [13], an anode and a non-aqueous electrolyte.

### ADVANTAGEOUS EFFECTS OF INVENTION

The cathode active material of the present invention is excellent in the cycle characteristics and rate characteristics even when charged at a high voltage. The cathode and the lithium ion secondary battery of the present invention are excellent in the cycle characteristics and rate characteristics even when charged at a high voltage. Further, the method of the present invention is capable of producing a cathode active material, a cathode and a lithium ion secondary battery, which are excellent in the cycle characteristics and rate characteristics even when charged at a high voltage.

### DESCRIPTION OF EMBODIMENTS

### <Cathode active material>

The cathode active material of the present invention comprises particles (II) having an oxide (I) of at least one metal element selected from the group consisting of Zr, Ti and Al locally distributed at the surface of a lithium-containing composite oxide comprising Li element and at least one transition metal element selected from the group consisting of Ni, Co and Mn (provided that the molar amount of the Li element is more than 1.2 times the total molar amount of said transition metal element).

### (Lithium-containing composite oxide)

The lithium-containing composite oxide in the present invention is one comprising Li element and at least one transition metal element selected from the group consisting of Ni, Co and Mn, wherein the molar amount of the Li element is more than 1.2 times than the total molar amount of said transition metal element {(molar amount of the Li element/total molar amount of said transition metal element)>1.2}. When the molar amount of the Li element is more than 1.2 times the total molar amount of said transition metal element, it is possible to improve the discharge capacity per unit mass.

The compositional ratio of the Li element to the total molar amount of said transition metal element is preferably from 1.25 to 1.75, more preferably from 1.25 to 1.65, particularly preferably from 1.40 to 1.55, in order to further increase the discharge capacity per unit mass.

As the transition metal element, it may contain at least one element selected from the group consisting of Ni, Co, and Mn, more preferably contains at least Mn element, particularly preferably contains all of Ni, Co and Mn elements.

The lithium-containing composite oxide (I) may contain Ni, Co, Mn and metal elements other than Li (hereinafter referred to as other metal elements). As other metal elements, it may contain elements such as Cr, Fe, Al, Ti, Zr, Mg, etc. Specifically, as the lithium-containing composite oxide, compounds represented by the following general formula (1) are preferred.

General formula (1): Li(LiₓMn_{y}Me_{z})OₚF_{q}

In the general formula (1), Me is at least one element selected from the group consisting of Co, Ni, Cr, Fe, Al, Ti, Zr and Mg. In the general formula (1), 0.09<x<0.3, 0.4≦y/(y+z)≦0.8, x+y+z=1, 1.9<p<2.1 and 0≦q≦0.1. Me is preferably Co, Ni or Cr, particularly preferably Co or Ni. In the general formula (1), 0.1 <x<0.25 is preferred, 0.11 <x<0.22 is more preferred, 0.5≦y/(y+z)≦0.8 is preferred, and 0.55≦y/(y+z)≦0.75 is more preferred.

In the general formula (1), it is preferred that Me is at least one element selected from the group consisting of Co and Ni, 0.1<x<0.25, 0.5≦y/(y+z)≦0.8, x+y+z=1, 1.9<p<2.1, and 0≦q≦0.1. Me is particularly preferably Co and Ni. In such a case, the molar ratio of Co to Ni (Co/Ni) is preferably from 0 to 1.5, more preferably from 0.1 to 1, particularly preferably from 0.2 to 0.8. Further, Me may contain, in addition to Co and Ni, a small amount of at least one element selected from the group consisting of Al, Ti, Mg, Zr, La, Ce, Cr, and Fe. Here, the small amount means from 0.001 to 0.05 times the total molar amount of Mn, Co and Ni.

As the lithium-containing composite oxide, specifically,
Li(Li_{0.13}Ni_{0.13}Ci_{0.06}Mn_{0.52})O₂, Li(Li_{0.13}Ni_{0.22}Co_{0.09}Mn_{0.56})O₂,
Li(Li_{0.13} Ni_{0.17} Co_{0.17} Mn_{0.53})O₂, Li(Li_{0.15} Ni_{0.17} Co_{0.13} Mn_{0.55})O₂,
Li(Li_{0.16}Ni_{0.17}Co_{0.08} Mn_{0.59})O₂, Li(Li_{0.17} Ni_{0.17} Co_{0.17} Mn_{0.49})O₂,
Li(Ll_{0.17}Ni_{0.21} Co_{0.08}Mn_{0.54})O₂, Li(Li_{0.17} Ni_{0.14} Co_{0.14} Mn_{0.55})O₂,
Li(Li_{0.18} Ni_{0.12}Co_{0.12} Mn_{0.58})O₂, Li(Li_{0.18} Ni_{0.16} Co_{0.12} Mn_{0.54})O₂,
Li(Li_{0.20}Ni_{0.12}Co_{0.08}Mn_{0.60})O₂, Li(Li_{0.20}Ni_{0.16}Co_{0.08}Mn_{0.56})O₂
Li(Li_{0.20} Ni_{0.13} Co_{0.13} Mn_{0.54})O₂, Li(Li_{0.22}Ni_{0.12} Co_{0.12}Mn_{0.54})O₂ or
Li(Li_{0.23} Ni_{0.12}Co_{0.08} Mn_{0.57})O₂ is preferred, and Li(Li_{0.16} Ni_{0.17}Co_{0.08} Mn_{0.59})O₂,
Li(Li_{0.17}Ni_{0.17} Co_{0.17} Mn_{0.49})O₂, Li(Li_{0.17} Ni_{0.21} Co_{0.08} Mn_{0.54})O₂,
Li(Li_{0.17}Ni_{0.14} Co_{0.14} Mn_{0.55})O₂, Li(Li_{0.18} Ni_{0.12}Co_{0.12} Mn_{0.58})O₂,
Li(Li_{0.18} Ni_{0.16}CO_{0.12} Mn_{0.54})O₂, Li(Li_{0.20} Ni_{0.12}Co_{0.08} Mn_{0.60})O₂,
Li(Li_{0.20} Ni_{0.16} Co_{0.08} Mn_{0.56})O₂ or Li(Li_{0.20} Ni_{0.13} Co_{0.13} Mn_{0.54})O₂ is particularly preferred.

In the lithium-containing composite oxide in the present invention, for example, in a case where the lithium-containing composite oxide is a compound represented by the above formula (1), the compositional ratio of the Li element to the total molar amount of said transition metal element {(1+x)/(y+z)} is more than 1.2 times, preferably from 1.25 to 1.75 times, more preferably from 1.25 to 1.65 times, particularly preferably from 1.40 to 1.55 times. When the compositional ratio is within such a range, it is possible to increase the discharge capacity per unit mass.

The lithium-containing composite oxide is preferably in the form of particles, and the average particle size D50 is preferably from 3 to 30 µm, more preferably from 4 to 25 µm, particularly preferably from 5 to 20 µm. In the present invention, the average particle size D50 means a volume-based accumulative 50% size (D50) which is a particle size at a point of 50% on an accumulative curve when the accumulative curve is drawn by obtaining the particle size distribution on the volume basis and taking the whole to be 100%. The particle size distribution is obtained from the frequency distribution and accumulative volume distribution curve measured by means of a laser scattering particle size distribution measuring apparatus. The measurement of particle sizes is carried out by sufficiently dispersing the powder in an aqueous medium by e.g. an ultrasonic treatment and measuring the particle size distribution (for example, by means of a laser diffraction/scattering type particle size distribution measuring apparatus Partica LA-950VII, manufactured by HORIBA, Ltd.).

The specific surface area of the lithium-containing composite oxide is preferably from 0.3 to 10 m²/g, more preferably from 0.5 to 5 m²/g, particularly preferably from 1 to 4 m²/g. When the specific surface area is from 0.3 to 10 m²/g, it is possible to form a dense cathode layer having a high capacity.

The lithium-containing composite oxide in the present invention is preferably one taking a layered rock salt type crystal structure (space group R-3m). Further, the lithium-containing composite oxide in the present invention has a high ratio of the Li element to the transition metal element, whereby in the XRD (X-ray diffraction) measurement, a peak is observed within a range of θ=20 to 25° like layered Li₂ MnO₃.

### (Oxide (I))

In order to prevent contact with a decomposed product formed by decomposition of an electrolyte caused by charging (oxidation reaction) at a high voltage, the oxide (I) in the present invention is preferably a compound inactive with the decomposed product.

The oxide (I) is an oxide of at least one metal element selected from the group consisting of Zr, Ti and Al. Specifically, ZrO₂, TiO₂ and Al₂ O₃ are mentioned.

Further, the oxide (I) may be a single oxide of metal, a composite oxide or a mixture of plural single oxides. As the composite oxide, ZrTiO₄, MgAl₂O₄, LiAiO₂, etc. may be exemplified. As a mixture of single oxides, a mixture of ZrO₂ and MgO, a mixture of ZrO₂ and TriO₂, a mixture of Al₂ O₃ and ZrO₂, etc. are exemplified.

As the oxide (I), ZrO₂ or Al₂O₃ is preferred, and Al₂ O₃ is particularly preferred, in that a uniform coating film is thereby readily obtainable, and it is chemically stable.

### (Particles (II))

The particles (II) in the present invention are ones having the above-described oxide (I) locally distributed at the surface of the above-mentioned lithium-containing composite oxide. Here, "locally distributed" means that the oxide (I) is contained in a larger amount at the surface than at the center of the lithium-containing composite oxide. In the particles (II), the oxide (I) being locally distributed at the surface of the lithium-containing composite oxide can be evaluated, for example, by cutting a particle (II), then polishing the cross section, followed by elemental mapping by an X-ray microanalyzer analysis (EPMA). By such an evaluation method, it is possible to confirm that the above-mentioned oxide (I) is present in a larger amount in a range of 100 nm from the surface than the center of the lithium-containing composite oxide (here, the center means a portion not in contact with the surface of the lithium-containing composite oxide, preferably a portion where the average distance from the surface is the longest).

The proportion of the oxide (I) in the particles (II) can be measured by dissolving the cathode active material in an acid and carrying out ICP (high frequency inductively-coupled plasma) measurement. Here, in a case where it is not possible to obtain the proportion of the oxide (I) by the ICP measurement, it may be calculated based on the charged amounts of the lithium-containing composite particles and the oxide (I).

The proportion of the oxide (I) in the particles (II) is such that the molar amount of at least one metal element selected from the group consisting of Zr, Ti and Al in the oxide (I) is preferably from 0.005 to 0.04 times, more preferably from 0.007 to 0.035 times, particularly preferably from 0.01 to 0.03 times, to the molar amount of the transition metal element in the lithium-containing composite oxide, since the cycle retention rate is thereby excellent.

In the cathode active material of the present invention, the shape of the oxide (I) locally distributed at the surface of the lithium-containing composite oxide can be evaluated by an electron microscope such as SEM (scanning electron microscope) or TEM (transmission electron microscope). The shape of the oxide (I) may, for example, be a particle-form, a film-form, an agglomerated form or the like, particularly preferably a film-form. In a case where the oxide (I) is a particle-form, the average particle size of the oxide (I) is preferably from 0.1 to 100 nm, more preferably from 0.1 to 50 nm, particularly preferably from 0.1 to 30 nm. The average particle size of the oxide (I) is an average of particle sizes of particles covering the surface of the lithium-containing composite oxide, as observed by an electron microscope such as SEM or TEM.

The oxide (I) may be locally distributed at least at a part of the surface of the lithium-containing composite oxide, but particularly preferably locally distributed over the entire surface of the lithium-containing composite oxide. Here, the surface means a surface or a surface layer. And, in the present invention, the oxide (I) is present in a larger amount at its surface or preferably in its surface layer of 0.02 µm from the surface, than the inside of the lithium-containing composite oxide particles.

The cathode active material of the present invention employs a lithium-containing composite oxide having a high lithium ratio, whereby the discharge capacity is large. Further, the cathode active material of the present invention comprises particles (II) having an oxide (I) of at least one metal element selected from the group consisting of Zr, Ti, and Al locally distributed at the surface of the lithium-containing composite oxide, whereby elution of Mn element is particularly prevented, and it is excellent in the cycle characteristics with little decrease in the capacity even if the charge and discharge cycle is carried out at a high voltage (particularly of at least 4.5 V).

### <Method for producing cathode active material>

The method for producing a cathode active material for a lithium ion secondary battery of the present invention is a method which comprises contacting and heating the following composition (1) and a lithium-containing composite oxide comprising Li element and at least one transition metal element selected from the group consisting of Ni, Co and Mn (provided that the molar amount of the Li element is more than 1.2 times the total molar amount of said transition metal element), to obtain a cathode active material for a lithium ion secondary battery, which comprises particles (II) having an oxide (I) of at least one metal element selected from the group consisting of Zr, Ti and Al locally distributed at the surface of the lithium-containing composite oxide:
Composition (1): a composition having dissolved in a solvent a compound containing at least one metal element selected from the group consisting of Zr, Ti and Al.

As the lithium-containing composite oxide, the above-described lithium-containing composite oxide may be employed, and the preferred embodiment is also the same.

A method for producing the lithium-containing composite oxide may, for example, be a method wherein a lithium compound and a precursor for a lithium-containing composite oxide obtained by a coprecipitation method, are mixed and fired, a hydrothermal synthesis method, a sol-gel method, a dry blending method or an ion exchange method. However, preferred is a method wherein a lithium compound and a coprecipitated composition obtained by a coprecipitation method (the precursor for a lithium-containing composite oxide) are mixed and fired, whereby transition metal elements to be contained are uniformly mixed, so that the discharge capacity will be excellent.

Composition (1) is a composition having dissolved in a solvent a compound containing at least one metal element selected from the group consisting of Zr, Ti and Al.

As a compound containing Zr element, ammonium zirconium carbonate, an ammonium zirconium halide or zirconium acetate is preferred, and ammonium zirconium carbonate or an ammonium zirconium halide is more preferred.

As a compound containing Ti element, ammonium titanium lactate, titanium lactate, titanium diisopropoxybis(triethanolaminate), peroxotitanium or a titanium peroxocitric acid complex is preferred, and titanium lactate or ammonium titanium lactate is more preferred.

As a compound containing Al element, aluminum acetate, aluminum oxalate, aluminum citrate, aluminum lactate, basic aluminum lactate or aluminum maleate is preferred, and aluminum lactate or basic aluminum lactate is particularly preferred.

As a reason why the above-mentioned ammonium zirconium carbonate, ammonium zirconium halide, titanium lactate, ammonium titanium lactate, aluminum lactate or basic aluminum lactate is preferred, it may be mentioned that when such a compound is employed, it is possible to increase the metal element concentration in the composition (1), and even if the pH of the composition (1) is increased by lithium at the time in contact with the lithium-containing composite oxide, precipitation will not occur, whereby the oxide (1) of a metal element can easily be uniformly covered on the surface of the lithium-containing composite oxide. Particularly, since a Li excessive lithium-containing composite oxide wherein the molar amount of Li element is more than 1.2 to the total molar amount of the transition metal element, is likely to increase the pH of the composition (1), the composition (1) is preferably one whereby precipitation will not be formed even when the pH becomes at least 11.

Further, as a reason why the above ammonium zirconium carbonate, ammonium zirconium halide, titanium lactate, ammonium titanium lactate, aluminum lactate or basic aluminum lactate is preferred, there are further merits such that (A) it is possible to prevent dissolution of the lithium-containing composite oxide, since at the time of contacting an aqueous solution containing such a compound with the lithium-containing composite oxide, the aqueous solution will not be excessively acidic, (B) at the time of heating, there is no generation of a hazardous gas such as a nitrogen oxide gas, and (C) after the heating, a component harmful to battery performance, such as a sulfate radical, will not remain in the particles (II), other than Zr, Ti or Al as the desired element.

The solvent is preferably a solvent containing water from the viewpoint of the reactivity or the stability of the compound containing the metal element, more preferably a mixed solvent of water and a water-soluble alcohol and/or polyol, particularly preferably water. The water-soluble alcohol may, for example, be methanol, ethanol, 1-propanol or 2-propanol. The polyol may, for example, be ethylene glycol, propylene glycol, diethylene glycol, dipropylene glycol, polyethylene glycol, butanediol or glycerin. The total content of the water-soluble alcohol and the polyol contained in the solvent is preferably from 0 to 20 mass%, more preferably from 0 to 10 mass%, based on the total amount of the respective solvents (the entire amount of solvent). It is particularly preferred that the solvent is solely water, since water is excellent from the viewpoint of the safety, environmental aspect, handling efficiency and cost.

Further, the composition (1) may contain a pH-adjusting agent. The pH-adjusting agent is preferably one which volatilizes or decomposes when heated. Specifically, an organic acid such as acetic acid, citric acid, lactic acid or formic acid, or ammonia is preferred.

The pH of the composition (1) is preferably from 3 to 12, more preferably from 3.5 to 12, particularly preferably from 4 to 10. When the pH is within such a range, elution of Li element from the lithium-containing composite oxide is less when the composition (1) and the lithium-containing composite oxide are contacted, and impurities such as a pH-adjusting agent, etc. are less, whereby good battery characteristics can easily be obtainable.

Preparation of the composition (1) is preferably carried out by heating as the case requires. The heating temperature is preferably from 40°C to 80°C, particularly preferably from 50°C to 70°C. By the heating, dissolution of the metal-containing compound in the solvent readily proceeds, whereby the dissolution can be carried out stably.

The concentration of the compound containing the metal element, contained in the composition (1) to be used in the present invention, is preferably high from such a viewpoint that it is necessary to remove the solvent by heating in the subsequent step. However, if the concentration is too high, the viscosity becomes high, whereby uniform mixing of the composition (1) with other element sources to form the cathode active material tends to deteriorate, or in a case where the lithium-containing composite oxide is one containing Ni, the composition (1) tends to hardly penetrate into the Ni element source. Therefore, the concentration of the compound containing the metal element, contained in the composition (1), is preferably from 1 to 30 mass%, particularly preferably from 4 to 20 mass%, as calculated as the oxide (I) of the metal element.

As the method of contacting the composition (1) and the lithium-containing composite oxide, for example, a spray coating method or wet process method may be applied, and a method of spraying the composition (1) to the lithium-containing composite oxide by a spray coating method, is particularly preferred. In the wet process method, it is necessary to remove the solvent by filtration or evaporation after the contact, whereby the process becomes cumbersome. In the case of the spray coating method, the process is simple, and it is possible to uniformly deposit the oxide (I) on the surface of the lithium-containing composite oxide.

The amount of the composition (1) to be contacted with the lithium-containing composite oxide is preferably from 1 to 50 mass%, more preferably from 2 to 40 mass%, particularly preferably from 3 to 30 mass%, to the lithium-containing composite oxide. When the proportion of the composition (1) is within such a range, it is easy to uniformly deposit the oxide (I) on the surface of the lithium-containing composite oxide, and at the time of spray coating the composition (1) to the lithium-containing composite oxide, the lithium-containing composite oxide will not be agglomerated, and agitation can be facilitated.

Further, in the method of the present invention, it is preferred to add the composition (1) to the lithium-containing composite oxide under agitation and mix the composition (1) and the lithium-containing composite oxide, to contact the composition (1) with the lithium-containing composite oxide. As an agitating apparatus, a drum mixer or a solid air low shearing force agitator may be employed. By contacting the composition (1) and the lithium-containing composite oxide under agitation and mixing, it is possible to obtain particles (II) having the oxide (I) locally distributed more uniformly at the surface of the lithium-containing composite oxide.

In the method for producing a cathode active material for a lithium ion secondary battery of the present invention, the composition (1) and the lithium-containing composite oxide are contacted and heated. By contacting and heating the composition (1) and the lithium-containing composite oxide, it is possible to efficiently convert the compound containing at least one metal element selected from the group consisting of Zr, Ti and Al to the oxide (I), and it is possible to remove volatile impurities such as water, an organic component, etc.

The heating is preferably carried out in an oxygen-containing atmosphere. The heating temperature is preferably from 200 to 600°C, more preferably from 250 to 550°C, particularly preferably from 350 to 550°C. When the heating temperature is at least 200°C, the compound containing at least one metal element selected from the group consisting of Zr, Ti and Al can easily be converted to the oxide (I), and volatile impurities such as remaining water, etc. become little and will not adversely affect the cycle characteristics. When the heating temperature is within the above-mentioned range, a reaction of the oxide (I) and the lithium or the lithium-containing composite oxide is less likely to proceed, and the oxide (I) will be locally distributed at the surface of the lithium-containing composite oxide, whereby the cycle characteristics will be improved.

The heating time is preferably from 0.1 to 24 hours, more preferably from 0.5 to 18 hours, particularly preferably from 1 to 12 hours.

### <Cathode>

The cathode for a lithium ion secondary battery of the present invention comprises the above-described cathode active material, an electrically conductive material and a binder. The cathode for a lithium ion secondary battery has a cathode active material layer containing the cathode active material of the present invention, formed on a cathode current collector (cathode surface). The cathode for a lithium ion secondary battery can be produced, for example, in such a manner that the cathode active material of the present invention, an electrically conductive material and a binder are dissolved in a solvent, dispersed in a dispersing medium or kneaded with a solvent, to prepare a slurry or kneaded product, and the prepared slurry or kneaded product is supported on a cathode current collector plate by e.g. coating.

The electrically conductive material may, for example, be a carbon black such as acetylene black, graphite or Ketjenblack.

The binder may, for example, be a fluorine resin such as polyvinylidene fluoride or polytetrafluoroethylene, a polyolefin such as polyethylene or polypropylene, an unsaturated bond-containing polymer or copolymer such as styrene/butadiene rubber, isoprene rubber or butadiene rubber, or an acrylic acid type polymer or copolymer such as acrylic acid copolymer or methacrylic acid copolymer.

### <Lithium ion secondary battery>

The lithium ion secondary battery of the present invention comprises the above-described cathode for a lithium ion secondary battery, an anode and a non-aqueous electrolyte.

The anode comprises an anode current collector and an anode active material layer containing an anode active material, formed thereon. It can be produced, for example, in such a manner that an anode active material and an organic solvent are kneaded to prepare a slurry, and the prepared slurry is applied to an anode current collector, followed by drying and pressing.

As the anode current collector, a metal foil such as a nickel foil or cupper foil may, for example, be used.

The anode active material may be any material so long as it is capable of absorbing and desorbing lithium ions. For example, it is possible to employ a lithium metal, a lithium alloy, a lithium compound, a carbon material, an oxide composed mainly of a metal in Group 14 or 15 of the periodic table, a carbon compound, a silicon carbide compound, a silicon oxide compound, titanium sulfide, a boron carbide compound, etc.

As the lithium alloy or lithium compound, it is possible to employ a lithium alloy or lithium compound constituted by lithium and a metal which is capable of forming an alloy or compound with lithium.

As the carbon material, it is possible to use, for example, non-graphitizable carbon, artificial graphite, natural graphite, thermally decomposed carbon, cokes such as pitch coke, needle coke, petroleum coke, etc., graphites, glassy carbons, an organic polymer compound fired product obtained by firing and carbonizing a phenol resin, furan resin, etc. at a suitable temperature, carbon fibers, activated carbon, carbon blacks, etc.

The metal in Group 14 of the periodic table may, for example, be silicon or tin, and most preferred is silicon. Further, as a material which is capable of absorbing and desorbing lithium ions at a relatively low potential, it is possible to use, for example, an oxide such as iron oxide, ruthenium oxide, molybdenum oxide, tungsten oxide, titanium oxide, tin oxide, etc. or other nitrides.

As the non-aqueous electrolyte, it is preferred to employ a non-aqueous electrolyte having an electrolyte salt dissolved in a non-aqueous solvent.

As the non-aqueous electrolyte, it is possible to use one prepared by suitably combining an organic solvent and an electrolyte. As the organic solvent, any solvent may be used so long as it is useful for batteries of this type, and for example, it is possible to use propylene carbonate, ethylene carbonate, diethyl carbonate, dimethyl carbonate, 1,2-dimethoxyethane, 1,2-diethoxyethane, γ-butyrolacton diethyl ether, sulfolan, methyl sulfolan, acetonitrile, an acetic acid ester, a butylic acid ester, a propionic acid ester, etc. Particularly, from the viewpoint of the voltage stability, it is preferred to use a cyclic carbonate such as propylene carbonate, or a chain-structured carbonate such as dimethyl carbonate or diethyl carbonate. Further, such organic solvents may be used alone, or two or more of them may be used as mixed.

Further, as other non-aqueous electrolytes, it is possible to use a solid electrolyte containing an electrolyte salt, a polymer electrolyte, a solid or geled electrolyte having an electrolyte mixed or dissolved in e.g. a polymer compound, etc.

The solid electrolyte may be any material so long as it has lithium ion conductivity, and for example, either one of an inorganic solid electrolyte and a polymer electrolyte may be used.

As the inorganic solid electrolyte, it is possible to use lithium nitride, lithium iodide, etc.

As the polymer electrolyte, it is possible to use an electrolyte salt and a polymer compound which dissolves the electrolyte salt. And, as such a polymer compound, it is possible to use an ether type polymer such as poly(ethylene oxide) or a crosslinked product thereof, a poly(methacrylate) ester type polymer, an acrylate type polymer, etc. alone or as mixed or copolymerized.

The matrix for the geled electrolyte may be any one so long as it is geled upon absorption of the above non-aqueous electrolyte, and various polymers may be employed. Further, as the polymer material to be used for the geled electrolyte, it is possible to use, for example, a fluorinated polymer such as poly(vinylidene fluoride) or poly(vinylidene fluoride-co-hexafluoropropylene). Further, as a polymer material to be used for the geled electrolyte, it is possible to use, for example, polyacrylonitrile or a copolymer of polyacrylonitrile. Further, as a polymer material to be used for the geled electrolyte, it is possible to use, for example, an ether type polymer, such as a polyethylene oxide, or a copolymer or cross-linked product of polyethylene oxide. As the monomer for the copolymer may, for example, be polypropylene oxide, methyl methacrylate, butyl methacrylate, methyl acrylate or butyl acrylate.

Further, from the viewpoint of the stability against the redox reaction, it is particularly preferred to use a fluorinated polymer among the above-mentioned polymers.

As the electrolyte salt to be used in the above-described various electrolytes, any one of those commonly used for batteries of this type may be used. As such an electrolyte salt, for example, LiClO₄ , LiPF₆, LiBF₄, CH₃ SO₃ Li, LiCl, LiBr, etc. may be used.

The shape of the lithium ion secondary battery of the present invention may be suitably selected depending on the intended use from e.g. a coin-shape, a sheet-form (film-form), a folded shape, a wound cylinder with bottom, a button shape, etc.

### EXAMPLES

### <Synthesis of lithium-containing composite oxide>

By adding 1,245.9 g of distilled water, 140.6 g of nickel(II) sulfate hexahydrate, 131.4 g cobalt(II) sulfate heptahydrate and 482.2 g of manganese(II) sulfate pentahydrate were uniformly dissolved to obtain raw material solution. By adding 320.8 g of distilled water, 79.2 g of ammonium sulfate was uniformly dissolved to obtain an ammonia source solution. By adding 1,920.8 g of distilled water, 79.2 g of ammonium sulfate was uniformly dissolved to obtain a mother liquid. By adding 600 g of distilled water, 400 g of sodium hydroxide was uniformly dissolved to obtain a pH-adjusting liquid.

Into a 2 L baffle-equipped glass reactor, the mother liquid was put and heated to 50°C by a mantle heater, and the pH-adjusting liquid was added to bring the pH to be 11.0. While stirring the solution in the reactor by anchor-type stirring vanes, the raw material solution was added at a rate of 5.0 g/min, and the ammonia source solution was added at a rate of 1.0 g/min, to have a composite hydroxide of nickel, cobalt and manganese precipitated. During the addition of the raw material solution, the pH-adjusting solution was added to maintain the pH in the reactor to be 11.0. Further, in order to prevent oxidation of the precipitated hydroxide, nitrogen gas was introduced into the reactor at a low rate of 0.5 L/min. Further, the liquid was continuously withdrawn so that the liquid amount in the reactor would not exceed 2 L.

In order to remove impurity ions from the obtained composite hydroxide of nickel, cobalt and manganese, pressure filtration and dispersion to distilled water were repeated for washing. The washing was terminated when the electrical conductivity of the filtrate became 25 µS/cm, followed by drying at 120°C for 15 hours to obtain a precursor.

The contents of nickel, cobalt and manganese in the precursor were measured by ICP and found to be 11.6 mass%, 10.5 mass% and 42.3 mass%, respectively, (nickel:cobalt:manganese=0.172:0.156:0.672 by molar ratio).

20 g of the precursor and 12.6 g of lithium carbonate having a lithium content of 26.9 mol/kg were mixed and fired at 900°C for 12 hours in an oxygen-containing atmosphere to obtain a lithium-containing composite oxide for Examples. The composition of the obtained lithium-containing composite oxide for Examples was Li_{1.2}(Ni_{0.172}Co_{0.156}Mn_{0.672})_{0.8}O₂. The lithium-containing composite oxide for Examples had an average particle size D50 of 5.9 µm, and a specific surface area of 2.6 m²/g as measured by means of BET (Brunauer, Emmett, Teller) method.

### EXAMPLE 1

To 7.02 g of a basic aluminum lactate aqueous solution having an aluminum content of 8.5 mass% as calculated as Al₂ O₃, 2.98 g of distilled water was added to prepare an Al aqueous solution (composition (1)).

To 10 g of the lithium-containing composite oxide for the Examples, 1.0 g of composition (1) was added by spraying, and composition (1) and the lithium-containing composite oxide for the Examples were mixed and contacted. Then, the obtained mixture was dried at 90°C for 2 hours and then heated at 450°C for 8 hours in an oxygen-containing atmosphere to obtain a cathode active material (A) of Example 1 comprising particles (II) having an oxide (I) of AI element locally distributed at the surface of the lithium-containing composite oxide.

Aluminum being the metal element (covering material) of composition (1) contained in the cathode active material (A) is 0.013 by molar ratio (covering amount) to the total of nickel, cobalt and manganese being the transition metal elements in the lithium-containing composite oxide for the Examples {(number of moles of Al)/(total number of moles of Ni, Co and Mn)}. The cross-section of the obtained powder of the cathode active material (A) was embedded with a resin and polished with fine particles of cerium oxide, followed by Al mapping of the cross-section of particles of cathode active material (A) by EPMA, whereby a larger amount of Al was detected at the outer surface of the particles than inside of the particle.

### EXAMPLES 2 to 4

In the same manner as in Example 1 except that the amount of composition (1) sprayed, was changed to 0.5 g, 1.5 g and 2.0 g, respectively, cathode active materials (B) to (D) were obtained which comprised particles (II) having an oxide (I) of Al element locally distributed at the surface of the lithium-containing composite oxide.

Aluminum being the metal element (covering material) in composition (1) contained in cathode active materials (B) to (D) is 0.006, 0.019 and 0.025, respectively, by molar ratio (covering amount) to the total of nickel, cobalt and manganese being transition the metal elements in the lithium-containing composite oxide for the Examples {(number of moles of Al)/(total number of moles of Ni, Co and Mn)}. The cross-section of the powder of each of the obtained cathode active materials (B to (D)) was embedded with a resin and polished with fine particles of cerium oxide, followed by Al mapping of the cross-section of particles of each of the cathode active materials (B) to (D), whereby a larger amount of Al was detected at the outer surface of the particles than the inside of the particles.

### EXAMPLE 5

To 6.97 g of an ammonium zirconium carbonate (chemical formula: (NH₄)₂ [Zr(CO₃)₂ (OH)₂]) aqueous solution having a zirconium content of 20.7 mass% as calculated as ZrO₂ , 3.03 g of distilled water was added to prepare a Zr aqueous solution (composition (2)).

Then, to 10 g of the lithium-containing composite oxide for the Examples under agitation, 1.5 g of composition (2) was added by spraying, and composition (2) and the lithium-containing composite oxide for the Examples were mixed and contacted. Then, the obtained mixture was dried at 90°C for two hours and then, heated at 450°C for 5 hours in an oxygen-containing atmosphere to obtain a cathode active material (E) comprising particles (II) having an oxide (I) of Zr element locally distributed at the surface of the lithium-containing composite oxide.

Zirconium being the metal element (covering material) in composition (2) contained in the cathode active material (E) is 0.019 by molar ratio (covering amount) to the total of nickel, cobalt and manganese being the transition metal elements in the lithium-containing composite oxide for the Examples {(number of moles of Zr)/(total number of moles of Ni, Co and Mn)}. The cross-section of the obtained particles of the cathode active material (E) was embedded with a resin and polished with fine particles of cerium oxide, followed by Zr mapping of the cross-section of the particles of the cathode active material (E) by EPMA (X-ray microanalyzer), whereby a larger amount of Zr was detected at the outer surface of the particles than the inside of the particles.

### EXAMPLES 6 and 7

In the same manner as in Example 5 except that the amount of composition (2) sprayed was changed to 1.0 g and 2.0 g, respectively, the cathode active materials (F) and (G) were obtained which comprised particles (II) having an oxide of Zr element locally distributed at the surface of the lithium-containing composite oxide.

Zirconium being the metal element (covering material) in composition (2) contained in the cathode active materials (F) and (G), is 0.013 and 0.025, respectively, by molar ratio (covering amount) to the total of nickel, cobalt and manganese being the transition metal elements in the lithium-containing composite oxide for the Examples {(number of moles of Zr)/(total number of moles of Ni, Co and Mn)}. The cross-section of the obtained particles of the cathode active materials (F) and (G) was embedded with a resin and polished with fine particles of cerium oxide, followed by Zr mapping of the cross-section of the particles of each of the cathode active materials (F) and (G) by EPMA, whereby a larger amount of Zr was detected at the outer surface of the particles than the inside of the particles.

### COMPARATIVE EXAMPLE 1 <No covering>

The lithium-containing composite oxide for the Examples was not subjected to covering treatment and designated as cathode active material (H).

### COMPARATIVE EXAMPLES 2 to 5

To 1.24 g of strontium nitrate, 8.76 g of distilled water was added to prepare a Sr aqueous solution (composition (3)).

0.36 g of boric acid and 9.64 g of distilled water were added to prepare a B aqueous solution (composition (4)).

To 1.50 g of magnesium nitrate hexahydrate, 8.50 g of distilled water was added to prepare a Mg aqueous solution (composition (5)).

To 2.08 g of indium nitrate trihydrate, 7.92 g of distilled water was added to prepare a In aqueous solution (composition (6)).

In the same manner as in Example 1 except that instead of spraying 1.0 g of composition (1), 2.0 g of each of compositions (3) to (6) was sprayed to the lithium-containing composite oxide for the Examples, cathode active materials (I) to (L) were obtained which comprised particles (II) having an oxide (I) of Sr, B, Mg or In locally distributed at the surface of the lithium-containing composite oxide.

### <Preparation of cathode sheet>

Using, as the cathode active material, cathode active materials (A) to (L) in Examples 1 to 7 and Comparative Examples 1 to 5, respectively, the cathode active material, acetylene black (electrically conductive material) and a polyvinylidene fluoride solution (solvent: N-methylpyrrolidone) containing 12.1 mass% of polyvinylidene fluoride (binder), were mixed, and N-methylpyrrolidone was further added to prepare a slurry. The mass ratio of the cathode active material, acetylene black and the polyvinylidene fluoride was 80/12/8. The slurry was applied on one side of an aluminum foil (cathode current collector) having a thickness of 20 µm by means of a doctor blade, followed by drying at 120°C and roll pressing twice to prepare a cathode sheet in each of Examples 1 to 7 and Comparative Examples 1 to 5, to be used as a cathode for a lithium battery.

### <Assembling of battery>

A stainless steel simple sealed cell type lithium battery in each of Examples 1 to 7 and Comparative Examples 1 to 5 was assembled in an argon globe box by using as a cathode one punched out from the above-described cathode sheet in each of Examples 1 to 7 and Comparative Examples 1 to 5, as an anode a metal lithium foil having a thickness of 500 µm, as an anode current collector a stainless steel plate having a thickness of 1 mm, as a separator a porous polypropylene having a thickness of 25 µm and further as an electrolyte, LiPF₆ at a concentration of 1 (mol/dm³ )/EC (ethylene carbonate)+DEC (diethyl carbonate) (1:1) solution (which means a mixed solution having LiPF₆ as a solute dissolved in EC and DEC in a volume ratio (EC:DEC=1:1).

### <Evaluation of initial capacity> <Evaluation of cycle characteristics>

With respect to the lithium batteries in Examples 1 to 7 and Comparative Examples 1 to 5, battery evaluation was carried out at 25°C.

That is, a charge/discharge cycle of charging to 4.6 V with a load current of 200 mA per 1 g of the cathode active material and then discharging to 2.5 V with a load current of 100 mA per 1 g of the cathode active material, was repeated 100 times.

At that time, the discharge capacity in the 3rd cycle is taken as the initial capacity at 4.6 V. Further, the discharge capacity in the 100th cycle/the discharge capacity in the 3rd cycle is taken as the cycle retention rate.

With respect to the lithium batteries in Examples 1 to 7 and Comparative Examples 1 to 5, the initial capacity at 4.6 V and the cycle retention rate are summarized in Table 1.

**TABLE 1**

| | Cathode active material | Covering material | Covering amount (molar ratio) | Initial capacity at 4.6 V (mAh/g) | Cycle retention rate (%) |
|---|---|---|---|---|---|
| Ex. 1 | (A) | Al | 0.013 | 213 | 88 |
| Ex. 2 | (B) | Al | 0.006 | 222 | 80 |
| Ex. 3 | (C) | Al | 0.019 | 212 | 92 |
| Ex. 4 | (D) | Al | 0.025 | 204 | 94 |
| Ex. 5 | (E) | Zr | 0.019 | 205 | 77 |
| Ex. 6 | (F) | Zr | 0.013 | 206 | 77 |
| Ex. 7 | (G) | Zr | 0.025 | 200 | 76 |
| Comp. Ex. 1 | (H) | Nil | 0.000 | 221 | 70 |
| Comp. Ex. 2 | (I) | Sr | 0.013 | 213 | 72 |
| Comp. Ex. 3 | (J) | B | 0.013 | 221 | 68 |
| Comp. Ex. 4 | (K) | Mg | 0.013 | 219 | 70 |
| Comp. Ex. 5 | (L) | In | 0.013 | 222 | 72 |

As shown in Table 1, while the cycle retention rate of the lithium batteries in Comparative Examples is at most 72%, the cycle retention rate of the lithium batteries in Examples exceeds 75%. Especially in cases where the covering material is Al, a high cycle retention rate was obtained.

### INDUSTRIAL APPLICABILITY

According to the present invention, it is possible to obtain a cathode active material for a lithium ion secondary battery, a cathode and a lithium ion secondary battery, which are small in size and light in weight and have a high discharge capacity per unit mass and which are also excellent in cycle characteristics, and they are useful for electronic instruments such as cell phones, batteries for vehicles, etc.

The entire disclosure of Japanese Patent Application No. 2010-243914 filed on October 29, 2010 including specification, claims, drawings and summary is incorporated herein by reference in its entirety.

## Claims

1. A cathode active material for a lithium ion secondary battery, which comprises particles (II) having an oxide (I) of at least one metal element selected from Zr, Ti and Al locally distributed at the surface of a lithium-containing composite oxide comprising Li element and at least one transition metal element selected from the group consisting of Ni, Co and Mn (provided that the molar amount of the Li element is more than 1.2 times the total molar amount of said transition metal element).

2. The cathode active material according to Claim 1, wherein the molar amount of at least one metal element selected from the group consisting of Zr, Ti and Al, is from 0.0001 to 0.05 times the total molar amount of said transition metal element in the lithium-containing composite oxide.

3. The cathode active material according to Claim 1 or 2, wherein the oxide (I) of said metal element is at least one member selected from the group consisting of ZrO₂, TiO₂ and Al₂O₃.

4. The cathode active material according to any one of Claims 1 to 3, wherein the lithium-containing composite oxide is represented by the following formula (1):
Li(LiₓMn_{y}Me_{z})OₚF_{q} (1)
wherein Me is at least one element selected from the group consisting of Co and Ni, 0.1<x<0.25, 0.5≦y/(y+z)≦0.8, x+y+z=1, 1.9<p<2.1, and 0≦q≦0.1.

5. A method for producing a cathode active material for a lithium ion secondary battery, which comprises contacting and heating the following composition (1) and a lithium-containing composite oxide comprising Li element and at least one transition metal element selected from the group consisting of Ni, Co and Mn (provided that the molar amount of the Li element is more than 1.2 times the total molar amount of said transition metal element), to obtain a cathode active material for a lithium ion secondary battery, which comprises particles (II) having an oxide (I) of at least one metal element selected from the group consisting of Zr, Ti and Al locally distributed at the surface of the lithium-containing composite oxide:
Composition (1): a composition having dissolved in a solvent a compound containing at least one metal element selected from the group consisting of Zr, Ti and Al.

6. The method according to Claim 5, wherein said heating is carried out from 200 to 600°C.

7. The method according to Claim 5 or 6, wherein the solvent in the composition (1) is water.

8. The method according to any one of Claims 5 to 7, wherein the pH of the composition (1) is from 3 to 12.

9. The method according to any one of Claims 5 to 8, wherein said contacting of the composition (1) and the lithium-containing composite oxide is carried out by adding the composition to the lithium-containing composite oxide under agitation and mixing the composition and the lithium-containing composite oxide.

10. The method according to any one of Claims 5 to 9, wherein the compound containing at least one metal element selected from the group consisting of Zr, Ti and Al, is at least one compound selected from the group consisting of ammonium zirconium carbonate, an ammonium zirconium halide, titanium lactate, titanium lactate ammonium salt, aluminum lactate and basic aluminum lactate.

11. The method according to any one of Claims 5 to 10, wherein the lithium-containing composite oxide is represented by the following formula (1):
Li(LiₓMnyMe_{z})OₚF_{q} (1)
wherein Me is at least one element selected from the group consisting of Co and Ni, 0.1<x<0.25, 0.5≦y/(y+z)≦0.8, x+y+z=1, 1.9<p<2.1, and 0≦q≦0.1.

12. The method according to any one of Claims 5 to 11, wherein said contacting of the composition (1) and the lithium-containing composite oxide is carried out by spraying the composition to the lithium-containing composite oxide by a spray coating method.

13. A cathode for a lithium ion secondary battery, which comprises the cathode active material for a lithium ion secondary battery as defined in any one of Claims 1 to 4, an electrically conductive material and a binder.

14. A lithium ion secondary battery comprising the cathode as defined in Claim 13, an anode and a non-aqueous electrolyte.
